Europäisches Patentamt

European Patent Office

Office européen des brevets

(19)

(11) Publication number: **0 200 055**
A2

(12) **EUROPEAN PATENT APPLICATION**

(21) Application number: 86104976.5

(22) Date of filing: **11.04.86**

(51) Int. Cl.⁴: **B 60 C 9/18**
**B 60 C 9/22**

(30) Priority: 29.04.85 US 727979

(43) Date of publication of application:
05.11.86 Bulletin 86/45

(84) Designated Contracting States:
**DE FR GB IT LU**

(71) Applicant: **THE FIRESTONE TIRE & RUBBER COMPANY**
**1200 Firestone Parkway**
**Akron, Ohio 44317(US)**

(72) Inventor: **Bohm, Georg G.A.**
**1212 Sunset View Drive**
**Akron Ohio 44313(US)**

(72) Inventor: **Roland, Charles M., Jr.**
**4358 Flesher Drive**
**Norton Ohio 44203(US)**

(72) Inventor: **Schonfeld, Steven E.**
**702 N. Revere Road**
**Akron Ohio 44313(US)**

(74) Representative: **von Raffay, Vincenz, Dipl.-Ing. et al,**
**Patentanwälte Raffay, Fleck & Partner Postfach 32 32 17**
**D-2000 Hamburg 13(DE)**

(54) **Tire band structure.**

(57) A breaker structure for a pneumatic tire comprised of a homogenous band comprised of a material having a modulus of between 200 and 10,000 megapascals and having a thickness of between 0.05 inches and .35 inches wherein said homogenous bands is reinforced with a cord material disposed circumferentially about said tire.

FIG. I

Croydon Printing Company Ltd.

TIRE BAND STRUCTURE

## BACKGROUND OF THE INVENTION

### Field of the Invention

This invention relates to a tire band structure which may be utilized as a structural reinforcement member in a vehicle tire. Specifically, the instant invention relates to a band structure adapted to be interposed between the carcass and tread of a tire. The band is comprised of an elastomeric material having a 10 percent modulus of between 200 and 10,000 megapascals and may be reinforced with essentially inextensible cords disposed at approximately 0° with respect to the circumferential centerline of the band.

### Description of the Prior Art

The use of a reinforcing band structure in tire construction is known in the art as disclosed by U.S. Patent No. 2,477,754 to Kraft which discloses the use of a belt structure which extends into the flanges of the tire to provide additional resistance to expansion of the tread in the flange by internal air pressure. Kraft discloses a tire which provides a landing wheel having a rim with impact shoulders on opposite sides of the tire receiving channel and a pneumatic tire having impact cushioning tread flanges overlying the rim shoulders so that the impacts are transmitted first through the pneumatic cushion provided by the tire and then through the thick rubber tread flanges to the impact shoulders of the wheel rim.

U.S. Patent No. 3,450,182 to Verdier discloses a pneumatic tire having one or both edge portions extending outwardly beyond the sidewalls respectively adjacent thereto when the sidewalls are flexed under normal load. Reinforcing is provided in and spanning the tread substantially from edge to edge thereof. The tread thus protects the sidewalls from damage by shock or abrasion caused by obstacles striking the sidewalls.

U.S. Patent No. 2,826,233 to Cooper discloses a tire construction employing a circumferentially extending ply of steel cords coated with a resilient material and having at least one circumferentially extending sheet adjacent to and substantially co-extensive with the steel cord layer, the said sheet being made of a synthetic organic polymer of high molecular weight and having a substantially greater sheer and tensile strength than that of tread rubber.

British Patent No. 913,746 discloses a tire construction using plastic strips for tread reinforcement wherein the strips are preferably made of polyamides or polyesters but where other synthetic resinous materials may be used. The strips may be used singly or in a plurality such that each reinforcing strip is as broad as the running surface of the tread.

U.S. Patent No. 3,433,689 to Marzocchi, et al relates to a tire construction employing bias cut plies of nylon cord and having a circumferential restricting band of elastomeric stock located peripherally about one or more of the nylon plies; said band having embedded therein a plurality of mutually parallel cords, bundles and/or strands of continuous substantially inextensible material.

U.S. Patent No. 3,018,814 to St. Paul discloses a tire construction employing a folded strip wherein there is applied in engagement with the folded strip an insert layer substantially of equal width thereto and comprising a composition of high elasticity modulus, preferably a composition provided by and incorporating therein filler material comprising textile and/or metallic fiber.

U.S. Patent No. 4,165,403 to Alban discloses a breaker belt interposed between the tread and the tire carcass, the belt including opposing elastic layers with a sheet interposed between the layers, the sheet having a plurality of perforations therein and comprising a material having a relatively high modulus of elasticity with respect to the layers.

U.S. Patent No. 4,111,249 to Markow discloses a pneumatic tire which is reinforced by a radially stabilized compression element such that the vehicle on which the tire is mounted can be operated safely in an essentially normal manner regardless of the state of pressurization of the tire. The compression element can be a solid flexible band of high strength metal or plastic and can comprise a layered construction having at least a pair of concentric metal bands which have a resilient material sandwiched therebetween. The invention of Grumman is directed to providing a tire having run flat capabilities. Accordingly, the materials disclosed by Grumman for use in the band structure have a tensile modulus of between 30,000 and 90,000 megapascals. The use of materials having such a high modulus results in tires which provide unacceptable performance in passenger vehicles. Specifically, the use of very high modulus materials in a tire produce unacceptable ride characteristics of the tire, namely poor obstacle enveloping characteristics.

European Patent Application No. 83630122.6 relates to a pneumatic radial tire having a plurality of annular semi-rigid bands disposed in the crown portion of the tire. The bands, which are comprised of a fiber reinforcement embodied in an epoxy resin matrix, are sufficiently rigid to provide load support when the tire is in the inflated condition but is sufficiently flexible so as to flatten when in the footprint of the tire. This minimal level of flexibility would, as noted above, result in a very uncomfortable ride.

European Patent Application No. 83630171.3 relates to a radial tire which has a belt structure with a pair of edge strips of square woven fabric. A portion of each edge strip is disclosed between a pair of belt plies that are adjacent to one another and the edge strips may be folded around the respective axial edges of the radially innermost belt ply.

European Patent Application No. 83104328.6 discloses a breaker for tires which have a radial carcass and are produced according to the traditional method and is directed to a modified breaker structure for reducing the absorption of horse power during tire operation. The breaker is comprised of a layer of cords which are resistant to tension and which are circumferentially disposed with respect to the tire. The cords are rubberized with an elastic material having a high modulus of rigidity with respect to shear stresses as well as a low hysteric loss. The material is characterized by the capability of maintaining the variability of its physical characteristics within a predetermined range of values during the service life of the tire. The belt materials disclosed in this application preferably have a shear modulus between 25 and 35 megapascals. It is known that a tire constructed according to the teachings of Pirelli provides a tire having serious deficiencies in its handling characteristics.

There is, therefore, a need for a band structure comprised of a homogenous material reinforced with circumferential cords that provides satisfactory ride and handling characteristics for the tire it is used in. Only a strictly defined range of material stiffness can give rise to acceptable handling characteristics without undue ride discomfort. The instant invention provides such a band structure by employing a homogenous band having a thickness of between .05 to .35 inches and comprised of a material having a tensile modulus of 200-10,000 megapascals interposed between the carcass and the tread band and reinforced with a Kevlar cord.

## SUMMARY OF THE INVENTION

The present invention relates to a band structure utilized in pneumatic tires. The band structure is comprised of a homogenous annular element reinforced with a circumferentially disposed continuous filament, which band structure is adapted to be interposed between the carcass and the tread of an otherwise conventionally constructed radial tire.

## BRIEF DESCRIPTION OF THE DRAWINGS

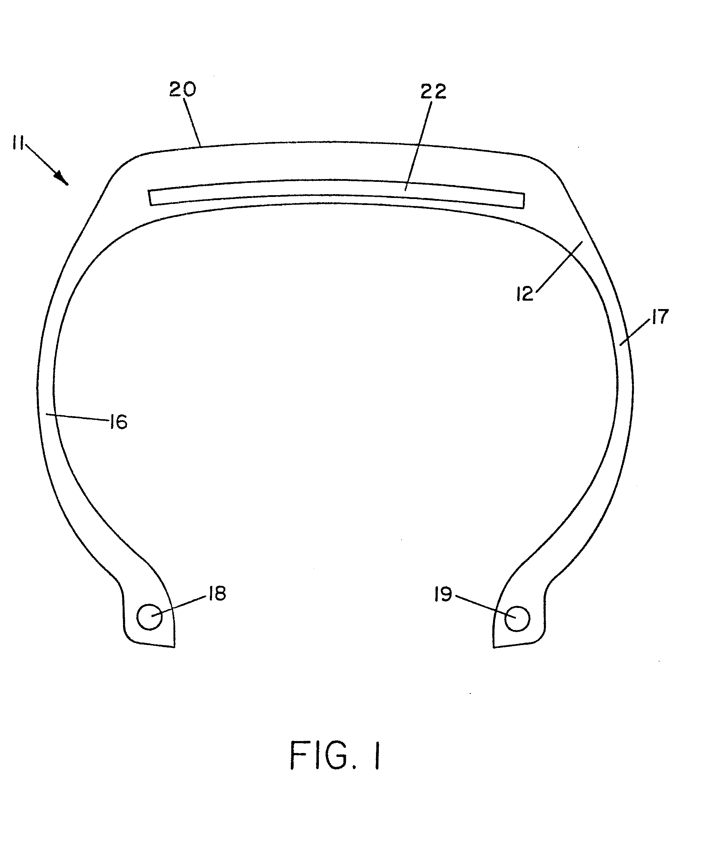

Fig. 1 is a cross-sectional view of a pneumatic tire employing the homogenous band structure of the instant invention.

## DESCRIPTION OF AN EXEMPLARY EMBODIMENT

In the tire industry, it is standard practice to insert a reinforcing belt between the tread layer and the carcass in order to prolong the useful life of the tread and obtain desired handling characteristics. These belts are typically made of one or more layers of parallel strands of inextensible cords, for example, steel wires, each embedded in an elastomeric material such as rubber and running in a complete circle or helix around the tire at an angle of typically 20° from the circumferential direction. Such a breaker structure helps to restrict changes in the shape of the tire surface due to the inextensible cord reinforcement. In addition, the breaker structure imparts stiffness to the tread region. By providing stiffness to the tread region the breaker structure minimizes drag that accompanies the forward and reverse direction of the vehicle, improves the handling and cornering force.

The conventional breaker structure described above is typically manufactured by encapsulating a plurality of parallel cord members in a rubber matrix to form a sheet having the cords parallelly disposed therein. The sheet of fabric is then cut into strips at a bias angle wherein the width of such strips substantially corresponds to the width of the tread region of the tire. The biased cut strips of cord rubber matrix material are then manually joined end to end in order to form a roll of breaker material having the cords disposed at an angle with respect to the longitudinal edge of such breaker material. The breaker material in roll form thus produced is then applied to the tire carcass by severing a portion of the breaker material from the roll and manually applying same to the tire carcass, splicing the ends of the breaker material together.

It can thus be appreciated that there is a considerable amount of equipment required to produce such a breaker structure. In addition, there is also a considerable amount of manual labor required to manufacture the breaker structure and apply same to the tire carcass. The crossed bias cords found in a conventional tire construction requires expensive calendering operations, the requirement to trim belts or otherwise accurately align the belts, the problems associated with the presence of bare metal ends bonding to the surrounding rubber, and pantographing between cords of the bias tread plies in a radial tire.

It is an object of the instant invention to eliminate the necessity for substantial machinery, intensive labor for fabrication and application and reduce the possibility for failure of the breaker structure by utilizing a molded or cast homogenous spliceless breaker structure which is readily amenable to automated fabrication and application to a tire carcass.

Referring now to Fig. 1 of the drawings, there is illustrated a cross-sectional view of a tire 11 including a carcass 12. Disposed along the sides of the tire 11 are sidewalls 16 and 17 terminating at their radially inwardmost edges in a pair of beads 18 and 19. A tread overlies the crown region of the carcass 12. Disposed between the carcass 12 and the tread 20 is band structure 22. The band structure 22 in an exemplary embodiment is comprised of a material having a tensile modulus of 200 to 10,000 megapascals and is fabricated with a cord structure comprised of Kevlar disposed at 20 ends per inch circumferentially within the band structure 22. In the exemplary embodiment the band structure 22 has a thickness of from 0.05 inches to 0.35 inches.

It may thus be appreciated that there is provided a band structure 22 comprised of a homogenous material having a cord structure disposed therein and made in a continuous annular configuration which is readily adaptable to automated manufacture of such belt structure and further the automatic application of such belt structure to a tire carcass. A further advantage of the instant invention is the complete elimination of steel belts from the tread ply region of the tire. The elimination of the steel belts also eliminates the problems associated with the adhesion problems associated with the bare metal ends found in the conventional breaker structure.

In the exemplary embodiment the homogenous material employed is nylon 6. It should be appreciated, however, that a number of other materials having a tensile modulus of 200 to 10,000 megapascals may be employed. The durability requirements of a modern tire impose further constraints on potential band materials. The high levels of stress and deformation to which the breaker would be subjected during use require the material of its composition to have exceptional impact resistance. The number of suitable materials includes Nylon 6, Nylon 6/6, polycarbonate, ABS, filled polypropylene, polyphenyleneoxide, polyester, copolymers of polycaprolactones and polybutadiene or other monomers, polyethersulfones, and blends of such materials with various fillers, such as glass or mineral. The band could be produced through various forming processes, such as reaction injection molding, liquid casting, etc.

The cord material employed in the exemplary embodiment is Kevlar. However, numerous other materials may be employed for the cord structure including steel, aromatic polyamides, fiberglass and the like.

Examples of typical alternative band structures are disclosed below which band structures may be employed in place of the breaker structure found in a conventional radial tire. The rest of the tire has conventional construction using convention materials.

| Example | Material | Room Temperature Tensile Modulus | Thickness | Reinforcement |
|---------|----------|----------------------------------|-----------|---------------|
| I | Nylon 6 | 2000 MPa (at 5% E) | 0.35" | 8.5 epi Kevlar (.030" dia.) at 0° angle = .06 Cord Volume Fraction wherein 0° angle is the circumferential direction of the tire. |
| II | Polyurethane | 1000 MPa (at 5% E) | 0.20" | 8.5 epi Kevlar (.030" dia.) at 0° angle = .03 Cord Volume Fraction |
| III | Poly-phenylene Oxide | 2500 MPa (at 5% E) | 0.15" | 8.5 epi Kevlar (.030" dia.) at 0° angle = .03 Cord Volume Fraction |
| IV | Nylon 6/6 | 5000 MPa (at 5% E) | 0.12" | 8.5 epi Kevlar (.030" dia.) at 0° angle = .03 Cord Volume Fraction |
| V | Nylon 6/6 | 5000 MPa (at 5% E) | 0.10" | 8.5 epi Kevlar (.030" dia.) at 0° angle = .04 Cord Volume Fraction |

| Example | Material | Room Temperature Tensile Modulus | Thickness | Reinforcement |
|---|---|---|---|---|
| VI | Nylon 6/6 | 5000 MPa (at 5% E) | 0.05" | 8.5 epi Kevlar (.030" dia.) at 0° angle = .06 Cord Volume Fraction |
| VII | Poly-phenylene-oxide | 2500 MPa (at 5% E) | 0.35" | 8.5 epi Kevlar (.030" dia.) at 0° angle = .02 Cord Volume Fraction |
| VIII | Nylon 6 | 200 MPa (at 5% E) | 0.20" | 8.5 epi Kevlar (.030" dia.) at 0° angle = .10 Cord Volume Fraction |
| IX | Polyether-sulfone | 3000 MPa | 0.12" | 8.5 epi Kevlar (.030" dia.) at 0° angle = 0.03 Cord Volume Fraction |
| X | Nylon, polybuta-diene copolymer | 2000 MPa | 0.12" | 8.5 epi Kevlar (.030" dia.) at 0° angle = 0.03 Cord Volume Fraction |

It is well known in the art that certain aspects of a tire's behavior, namely cornering, tread wear, handling and ride comfort are generally considered to be stiffness dominated characteristics. While other material and design characteristics of the tire are relevant to its total performance, it is generally considered that the stress-strain response of the belts of the tire at low strains primarily determines the cornering, tread wear, handling and ride comfort characteristics.

In particular, it has been generally considered that the tread region of the tire must possess a sufficient, but not overly great, degree of stiffness in order for the tire to behave properly. For example, in the case of cornering, it is the yaw response of that portion of the tire in contact with the road that is the controlling parameter. Specifically, the amount of lateral force that is generated by the imposition of a given deviation of the tire footprint from its original direction (commonly referred to as the slip angle). To predict a particular tire property, it is thus necessary to deduce which measures of stiffness (shear or bending, circumferential or transverse, etc.) are relevant, and then in some manner calculate these stiffness properties from the tire geometry and material properties.

The description of the cornering problem as conceived by Gough (V. E. Gough, Rubber & Chemical Technology, 41,988 (1968)) in the late 1960s is useful for explaining in general terms the relationship between tire material properties and design and the cornering and wear characteristics.

By considering the tire in contact with the road as a beam, Gough calculated the deflection delta, $\delta$, of the beam upon application of a centrally applied load F. The ratio of these quantities, the so called Gough stiffness, is then identified with the tire's cornering coefficient and is moreover calculable from well known expressions for bending and shearing of a beam. The obtained relation is:

$$\text{"Gough Stiffness"} = \frac{F}{\delta} = \frac{EG}{aE + bG}$$

Where E and G are the circumferential and shear moduli of the beam (that is, of the tire tread region) and a and b are related to the effective length L, width h and thickness t of the footprint and/or tread respectfully,

$$a = \frac{L}{8th}$$

$$b = \frac{L^3}{4th^3}$$

This Gough treatment is useful in pointing out those factors strongly influencing the cornering response of tires. Some examples can be used to illustrate:

I.  A radial tire with a steel cord reinforced belt made from conventional rubber stock whose cords lie at $\pm 20°$ from the circumferential direction.

II. A radial tire as in I except the rubber in the belt has a low strain modulus twenty-fold greater and the reinforcing cords lie at $\pm 0°$ from the circumferential direction.

In these examples the body ply is 0.1" thick with 16 ends per inch polyester cord, while the belt package is 0.2" thick with 10 steel cords per inch. The tensile E and shear G moduli of the composite structures which comprise the tires in these examples are calculated from the well known Halpin-Tsai equations (R. M. Jones, Mechanics of Composite Materials, McGraw Hill, New York, 1975) and the resulting moduli of the tire itself computed using two dimensional lamination theory (J. D. Walter, Tire Mechanics, 1977). The results for these examples are as follows:

| Case | Body Skim Modulus | Belt Skim Modulus | Belt Cord Angle | $E(\times 10^{-3})$ | G | Gough Stiffness |
|------|-------------------|-------------------|-----------------|----------------------|-----|------------------|
| I | 5 MPa | 10 MPa | $\pm 70°$ | 1.2 | 270 | 15 |
| II | 5 MPa | 200 MPa | $90°$ | 1.4 | 48 | 8.3 |

From the displayed data it can be observed that, in so far as the Gough stiffness is concerned, the bias belted radial (Case I) is clearly superior to the tires with circumferential belts. The Gough Stiffness model prediction is consistent with state of the art in that circumferential belted radial tires could not approach the performance level of conventional bias angled belted radial tires. If one considers the cornering and wear performance of a bias belted radial tire (Case I) to represent the minimum acceptable level, it might then be concluded that circumferentially belted tires are inadequate.

Experiments with conventional tires in which the belt angle was changed while other parameters were maintained constant, have demonstrated that at 0° belt angle very poor handling resulted. Applicants' invention, however, provides a circumferential belted tire having acceptable wear and handling characteristics.

Tires fabricated using the teachings of European Patent Application No. 83104328.6 have generally performed unsatisfactorily. This is, as suggested by the Gough stiffness calculated for Case II above, due to an insufficiently stiff tread region of the tire.

Although the Gough stiffness per se was developed to describe the yaw response of a tire's footprint, it has been generally empirically observed as well as a measure of the tire's tread wear resistance. It is generally accepted that tires possessing higher cornering coefficients will display correspondingly better wear behavior.

Ride comfort, on the other hand, is to a large extent a measure of the tire's obstacle enveloping ability, the lack of same producing a bumpy ride. Rolling of the tire onto an obstacle induces a bending moment in the footprint; consequently, it is seen that the ability to envelope such road obstacles is related to the circumferential flexural rigidity (i.e., out of plane bending stiffness) of the footprint. This quantity can be calculated similarly to the data in the above table. It is obvious that an overly stiff tread region will cause reduced ride comfort. This is why bias tires feel smoother riding than belted radials, an underinflated tire feels smoother than an overinflated one, and no doubt why a run flat design such as U.S. Patent No. 4,111,249 provides a very uncomfortable ride. It seems likely that in developing radial tires with belts with 0° circumferential cords, the need to maintain ride comfort may well impose constraints on the level of stiffness that can be obtained from using an increasingly stiff band material. Circumferential flexural rigidity (EI) of the breaker structure will determine the ride characteristics of the tire. When the cleat envelopment load begins to exceed the tire's rated load, the tire doesn't swallow the bump, but rather transmits any bump to the passengers through the vehicle suspension. (The cleat envelopment load test is statically measured at 25 psi on a two inch diameter semicircular steel cleat located medially in the center of the tread footprint. The cleat envelopment load is that load required to completely envelop the two inch diameter semicircular cleat.)

The following data has been obtained using actual tire measurements:

| Tire | Calculated EI | Cleat Envelopment Load (LB) |
|------|---------------|------------------------------|
| 1. Four ply nylon bias | 10-inch IN-LB | 1210 |
| 2. 2+2 belted rayon bias | 160 IN-LB | 1320 |
| 3. 2+4 rayon belted radial | 350 IN-LB | 1440 |

From the above data, it can clearly be observed that a higher circumferential flexural rigidity (EI) results in a generally higher cleat envelopment load, which in turn indicates that the tire having the higher circumferential flexural rigidity will have poorer ride comfort due to the increased cleat envelopment load. It has been found that a tire having a circumferential flexural rigidity (EI) of greater than 650 in-lb. produces a tire having unsatisfactory ride characteristics when used with a conventional suspension system. Moreover, as indicated by the data tabulated below, the invention of U.S. Patent No. 4,111,249 would produce an unacceptably hard ride.

The following table lists calculated circumferential flexural rigidity for several banded tread plies:

| Tensile Modulus (MPa) | Band Thickness (inches) | (EI) (IN-LB) |
|---|---|---|
| 200 | 0.30 | 87 |
| 1000 | 0.28 | 350 |
| 1000 | 0.30 | 435 |
| 5000 | 0.16 | 350 |
| $2 \times 10^5$ (steel) | 0.10 | 2800 |

It is clear from these considerations that the modulus requirements of the band material are more restrictive than has been heretofore realized. It must be appreciated that a homogenous band with circumferential cord reinforcement must impart a high level of stiffness to the tread area in order for proper handling characteristics to be obtained. At the same time, however, the tread area must remain sufficiently flexible to envelope road obstacles. Only in the manner outlined in this invention can both these requirements be satisfied.

RB:3215B/m

We Claim:

1. A pneumatic tire having a road-engaging tread surface and sidewalls attaching the edges of said tread surface to annular beads, said tire having a band comprised of a matrix material and circumferential reinforcing cords located under said tread surface, said circumferentially extending cords having a volume fraction of between and in relation to the matrix, said matrix having a material with a tensile modulus of between 200 and 10,000 megapascals at 5% elongation and said matrix having a thickness between .05 and .35" such that the pneumatic tire has a cornering coefficient of at least 0.15 and a circumferential flexural rigidity of less than 650 in-lb.

2. A pneumatic tire comprising:
   a)   a carcass;
   b)   a carcass reinforcement reinforcing said carcass;
   c)   bead wires anchoring opposite ends of said carcass reinforcement;
   d)   a tread; and
   e)   a tread reinforcing member annular in shape and disposed between said carcass and said tread wherein said tread reinforcing member is comprised of a matrix having a tensile modulus of at least 200 MPa but less than 10,000 MPa.

3. An improved breaker structure comprising:
   a)   an annular member comprised of a material having a tensile modulus of at least 200 MPa but less than 10,000 MPa; and
   b)   circumferential reinforcing members affixed to said annular member.

0200055

4. The breaker structure of claim 3 wherein said breaker is manufactured by coextrusion processing or injection molding.

5. The breaker structure of claim 3 wherein said breaker is manufactured by liquid casting or reaction injection molding techniques.

RB:3215B/m

FIG. I

0200055